# EUROPEAN PATENT APPLICATION

(11) **EP 1 988 277 A2**
(43) Date of publication of application: **05.11.2008**
(21) Application number: 08155500.5
(22) Date of filing: 30.04.2008
(51) Int. Cl.: F02M 49/02

(54) **Improvements Relating to Combustion Engine Technology**

(30) Priority: 02.05.2007 US 799670
(71) Applicant: Delphi Technologies, Inc., Troy, Michigan 48007 (US)
(72) Inventor: Dingle, Philip, Rochester, MI 48306-4306 (US)
(74) Representative: Gregory, John David Charles

(57) **Abstract**

A fuel system for use in a combustion chamber of a compression ignition internal combustion engine comprises a pump arrangement having a pump chamber (54) for fluid and a piston (38) which is movable outwardly from the combustion chamber (12) in response to pressure generated within the combustion chamber (12) as a result of combustion so as to pressurise fluid within the pump chamber (54). The system also includes a control valve assembly (70) for controlling the supply of fluid that is pressurised within the pump chamber (54) to an accumulator volume (80). In one particular aspect, the invention provides a fuel system for use in an engine having at least two engine cylinders, comprising a first pump arrangement associated with one of the engine cylinders and a second pump arrangement associated with the other of the engine cylinders, each of the first and second pump arrangements having a pump chamber for fluid and a piston which is movable outwardly from the combustion chamber in response to pressure generated within the combustion chamber as a result of combustion so as to pressurise fuel within the pump chamber. At least one control valve assembly controls the supply of fluid that is pressurised within the pump chamber of at least one of the pump arrangements to an accumulator volume.

## Description

### Technical Field

The invention considers improvements relating to compression ignition (diesel) internal combustion engine technology. In particular, the invention relates to an improved cylinder-pressure operated fuel pump for a common rail diesel fuel injection system.

### Background to the Invention

Increasingly, fuel injection systems of the common rail type are specified for new diesel engines. In such systems a multi-piston pump raises fuel pressure to a level that is suitable for injection directly into the engine combustion chamber. Typically, the system includes a high pressure pump having a cam drive arrangement, an accumulator volume or rail, one injector per engine cylinder and an electronic control unit (ECU) for controlling injection timing and other parameters. The high pressure pump is a complex, heavy and costly component, and although common rail systems provide benefits over more traditional fuel injection systems (e.g. distributor pumps, unit pumps), there are significant implications on engine design with respect to the location of the high pressure pump and its drive arrangement. In particular, the drive torque signature can include "spikes" which make the pump and its drive a leading source of undesirable noise, vibration and harshness.

There have been many developments in diesel engine technology in recent years, in particular relating to improvements to the combustion process itself. Currently, the diesel engine combustion process can be described as heterogeneous and diffusion based, although the prevailing trend now is to move towards a premixed auto-ignition model of some type. The various advanced combustion modes may be characterised by, among other things, the lack of a positive initiator for the start of combustion, the requirement for relatively high levels of dilution of the charge with exhaust gas and the undesirable generation of high rates of cylinder pressure rise (dp/dt) resulting in excessive noise and structural stress. Under premixed combustion conditions, unacceptable values in the range of 10 to 35 bar/crank angle degree have been recorded for cylinder pressure rise rate, whereas a value of perhaps 5 bar/crank angle degree would be considered a normal maximum. Although advanced combustion modes provide benefits for efficiency and emissions, the aforementioned characteristics in particular present problems for which solutions are sought.

By way of example, US 5476072 describes a cylinder head construction which is intended to address the stress induced by high rates of pressure rise in a valveless 2-stroke spark ignition engine.

By way of further background to the invention, the prior art in the following patent literature is acknowledged: US 4244342 and US 4394856 describe cylinder-pressure operated pumps combined with injector units, GB 465263 describes a cylinder-pressure operated pump for pressurising fuel for injection, and GB 590628 describes a fuel system where the pressure in one cylinder of the engine is used to pressurise lubricating oil for another cylinder of the engine.

It is an object of the invention to provide a cylinder-pressure operated pump which improves on the existing systems referenced above.

### Summary of the Invention

According to a first aspect of the invention, there is provided a fuel system for use in a combustion chamber of a compression ignition internal combustion engine, the fuel system comprising: a pump arrangement having a pump chamber for fluid and a piston which is movable outwardly from the combustion chamber in response to pressure generated within the combustion chamber as a result of combustion so as to pressurise fluid within the pump chamber, and a control valve assembly for controlling the supply of fluid that is pressurised within the pump chamber to an accumulator volume.

It is one benefit of the invention that the piston is moved outwardly from the combustion chamber in controlled response to pressure peaks that occur within the chamber as a result of rapid combustion. This provides an advantage over existing systems where no provision is made to absorb rapid pressure increases, a problem that is particularly evident during premixed combustion and/or high load conditions. In the present invention, a controlled increase in the combustion chamber volume can occur in unison with rapid gas expansion as the piston is urged outwardly from the combustion chamber. This is possible because the response rate of the light and dynamically mobile piston is better able to follow the high rates of pressure rise than is the case for the main cylinder piston. The rate of pressure increase in the combustion chamber is therefore moderated.

In one embodiment, the system may further comprise a filling valve assembly for regulating an intake of low pressure fluid to the pump chamber, prior to pressurisation.

The filling valve assembly may include a spring-controlled filling valve or an electronically controlled filling valve.

It is one benefit of providing the electronically controlled filling valve that it provides a means for influencing the start of combustion, particularly in engines in which there is no variable valve timing mechanism. As combustion pressure rises at the start of combustion, the electronically controlled filling valve can be energised briefly to force it to open, thus allowing the piston to retract and, hence, resulting in a small change in volume of the combustion chamber.

The system may further include a cylinder head for the combustion chamber, wherein the pump chamber is defined within a pump housing received within the cylinder head. It is convenient to house the control valve assembly within a valve housing common to the pump housing or, alternatively, in a valve housing located remote from the pump housing.

It is beneficial for the piston to be at least partially filled with a medium for aiding heat transfer away from a surface of the piston that is exposed to gases within the combustion chamber to aid heat transfer away from the lower face of the piston to the cylinder head.

In one embodiment, the filling and/or control valve assembly is operable by means of an electromagnetic actuator, but other actuator types may also be used.

The system may further include a sensor for sensing the pressure in the pump chamber. The control valve assembly may be actuated to open communication between the pump chamber and the accumulator volume in response to the sensed pressure.

A non-return valve may be provided between the control valve assembly and the accumulator volume.

The fluid that the piston pressurises, in use, may be fuel, but could be any other fluid for use in another engine function (e.g. hydraulically assisted turbo-charger).

According to a second aspect of the invention, there is provided a fuel system for use in a compression ignition internal combustion engine having at least two engine cylinders, the fuel system comprising a first pump arrangement associated with one of the engine cylinders and a second pump arrangement associated with the other of the engine cylinders. Each of the first and second pump arrangements has a pump chamber for fluid and a piston which is movable outwardly from the combustion chamber in response to pressure generated within the combustion chamber as a result of combustion so as to pressurise fluid within the pump chamber. At least one control valve assembly controls the supply of fluid that is pressurised within the pump chamber of at least one of the pump arrangements to an accumulator volume.

In this aspect of the invention, the control valve assembly may be common to both the first pump arrangement and the second pump arrangement so as to control the supply of fluid that is pressurised within the pump chamber of both the first pump arrangement and the second pump arrangement to a common accumulator volume.

Alternatively, the system may comprise a first control valve assembly for controlling the supply of fluid that is pressurised within the pump chamber of the first pump arrangement to a first accumulator volume and a second control valve assembly for controlling the supply of fluid that is pressurised within the pump chamber of the second pump arrangement to a second accumulator volume.

The common accumulator volume may store pressurised fluid in the form of fuel, in use, for the purpose of injection.

Alternatively, the first accumulator volume may store pressurised fluid in the form of fuel, in use, for the purpose of injection, whereas the second accumulator volume stores pressurised fluid, in use, for the purpose of one or more of the following: an electro-hydraulic variable valve actuation system, a hydraulically assisted turbo-charger, an intensifier piston for pressurising injectable fuel.

According to a third aspect of the invention, there is provided a fuel system for use in a combustion chamber of a compression ignition internal combustion engine, the fuel system comprising a pump arrangement having a pump chamber for fluid and a piston which is movable outwardly from the combustion chamber in response to pressure generated within the combustion chamber as a result of combustion so as to pressurise fluid within the pump chamber, and a filling valve assembly for regulating an intake of low pressure fluid to the pump chamber, prior to pressurisation.

In a fourth aspect, the invention provides a method of operating a fuel system for a combustion cylinder having an associated cylinder piston for performing a combustion cycle including a compression stroke, the fuel system including a pump chamber for fluid, a piston, and a control valve assembly, the method comprising moving the piston outwardly from the combustion chamber in response to pressure generated within the combustion chamber as a result of combustion so as to pressurise fluid within the pump chamber, and sensing the pressure of fluid within the pump chamber during the compression stroke. In response to the sensed fluid pressure, the control valve assembly is operated to permit a supply of fluid between the pump chamber and the accumulator volume at the imminent onset of auto-ignition combustion.

In a fifth aspect, the method of the invention comprises operating the filling valve assembly to open at or near the start of the compression stroke to allow the piston to move outwardly from the combustion chamber during the compression stroke in response to pressure generated within the combustion chamber as a result of combustion, thereby to change the volume of the combustion chamber.

A time period for which the filling valve assembly is held open is selected to provide a desired increase in volume of the combustion chamber.

Features of the first, second and third aspects of the invention may be implemented in the methods of the fourth and fifth aspects of the invention also, alone or in appropriate combination.

### Brief Description of the Drawings

The invention will now be described, by way of example only, with reference to the accompany figures in which:
Figure 1 is a schematic view of a fuel system of a first embodiment of the invention, including a pump arrangement, a rail control valve assembly and a spring controlled filling valve assembly,
Figure 2 is an exploded view of an outer sleeve, a piston, a plunger and a housing of the pump arrangement in Figure 1,
Figure 3 is an enlarged view of the rail control valve assembly of the fuel system in Figure 1,
Figure 4 is a timing diagram to illustrate operation of the fuel system in Figure 1 throughout a combustion cycle,
Figures 5(a) and (b) illustrate two operating states of the pump arrangement in Figure 1,
Figure 6 is a schematic diagram of a part of a fuel system of a second embodiment of the present invention, including a rail control valve assembly as in Figures 1 and 3, but with an electronically controlled filling valve assembly instead of the spring controlled filling valve assembly of Figures 1 and 3,
Figure 7 is a schematic diagram of a fuel system such as that shown in Figures 1 and 3, when implemented in a six cylinder engine, and
Figure 8 is a timing diagram to illustrate operation of a fuel system of Figure 6 throughout a combustion cycle, and
Figure 9 is a schematic diagram of a fuel system of a third embodiment of the present invention, similar to that shown in Figures 1 and 3 in that it includes a spring controlled filling valve assembly, but without the rail control valve assembly.

### Detailed Description of Preferred Embodiments

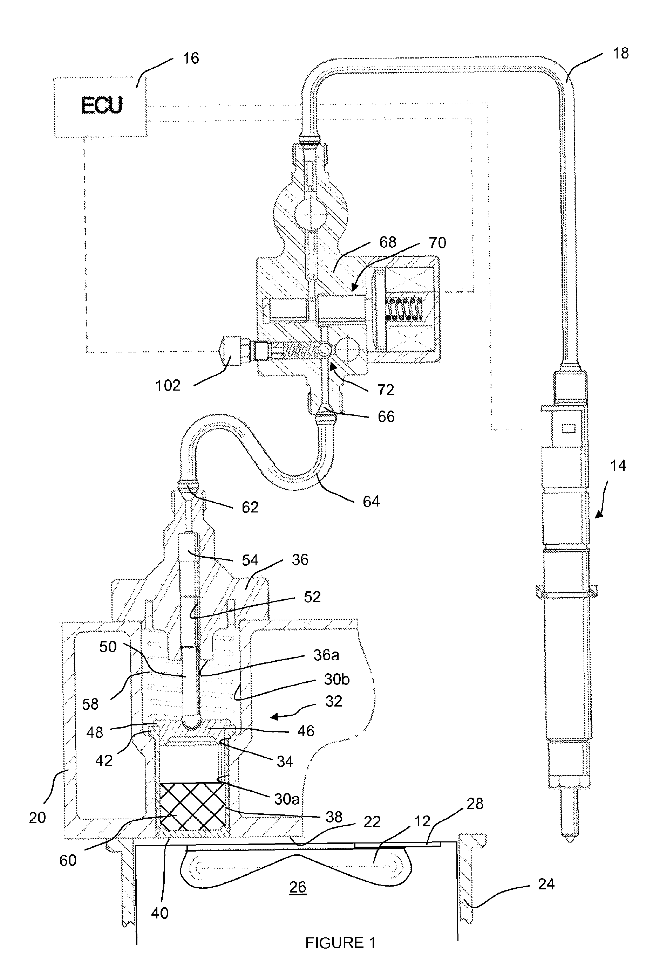

Referring to Figure 1, an engine cylinder for an internal combustion engine of the compression ignition (diesel) type defines a combustion chamber 12 into which combustible fuel is injected. In general, the engine is provided with a plurality of cylinders, but for simplicity only one of the cylinders will be described here. The combustion chamber 12 has an associated fuel injector 14 which is arranged to inject fuel at relatively high pressure into the combustion chamber 12 under the control of an Engine Control Unit (ECU) 16. The injector 14 receives pressurised fuel for injection through a supply passage 18.

The engine cylinder has a cylinder head 20 which defines an upper ceiling of the combustion chamber 12, typically referred to as the fire deck 22. A cylinder piston 26 is driven, in use, by a crank shaft of the engine within a cylinder sleeve 24. The cylinder piston 26 is provided with a recess or crown in its upper surface to define a piston bowl which forms a lower boundary of the combustion chamber 12. The cylinder head 20 is provided with inlet and exhaust valves (not shown) which are operable throughout the combustion cycle to allow air to flow to the combustion chamber 12 and exhaust gas to flow from the combustion chamber 12, respectively. A cut out 28 is provided on the upper surface of the right side of the cylinder piston 26 to accommodate an exhaust valve that is inwardly opening.

The cylinder head 20 is provided with a bore which houses a pump arrangement, referred to generally as 32. The bore is stepped to define a lower bore region 30a and an upper bore region 30b, the lower bore region 30a having a smaller diameter than the upper bore region 30b so that a first step or seat 34 of frusto-conical form is defined at the interface between the lower and upper bore regions 30a, 30b. The upper bore region 30b is closed by a housing 36 mounted on the upper surface of the cylinder head 20. The lower and upper bore regions 30a, 30b are concentric along an axis and, as such, are convenient to machine.

A piston 38 is movable within the bore region 30a under the influence of gas pressure within the combustion chamber 12 which results from the combustion process. The piston 38 takes the form of a hollow cup having, at its closed lower end, a lower external surface 40 which is exposed to gases within the combustion chamber 12.

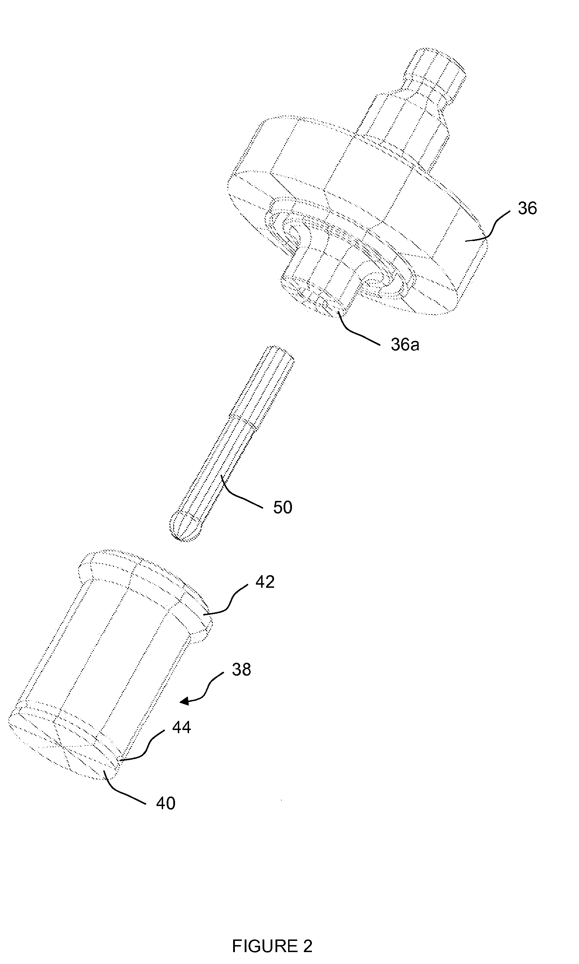

As shown in Figure 2, the piston 38 includes a main piston body having an annular lip or shoulder 42 at its upper end which is engageable with the step 34. At the lower end of the main piston body, one or more labyrinth grooves 44 (only one of which is shown) extend circumferentially around the outer surface of the piston 38 so as to minimise the escape of cylinder pressure past the piston 38, in use. As an alternative, a piston ring (not shown) could be used on the piston 38 for this purpose.

In an alternative embodiment (not shown), a resilient component, such as a wave or Belleville washer, rests upon the step 34 between the lower and upper bore regions 30a, 30b so as to ensure a soft landing is obtained when the lip 42 of the piston 38 comes to rest in this first position.

The hollow interior of the piston 38 is closed at its upper end by a piston cap 46. The piston cap 46 includes a lower portion (not visible in Figure 2) which is received within the hollow body of the piston 38, and an upper portion, of enlarged diameter, which defines an annular lip 48 which seats upon the annular lip 42 on the main piston body. In the illustration shown in Figure 1, the annular lip 48 of the piston cap 46 is engaged with the annular lip 42 of the main piston body.

The cap 46 of the piston 38 is in mechanical connection with a further piston or pumping plunger 50 which projects into the housing 36 mounted on the upper surface of the cylinder head 20. Measures are contemplated to minimise the transfer of heat from the piston 38 into the pumping plunger 50 at their interface. The housing 36 has a lower surface 36a and is provided with a further bore 52, within which an upper end of the pumping plunger 50, remote from the piston 38, is received. A seal (not shown) elastomeric or similar, may be provided for the plunger 50 or the housing 36 to minimise fuel leakage into the chamber defined within the upper bore region 30b.

The piston 38 is able to move within the lower bore region 30a between a first (rest) position in which the lower surface 40 of the piston 38 lies approximately flush with the fire deck 22, and a second (maximum lift) position in which the piston 38 has moved outwardly from the combustion chamber 12, within the lower bore region 30a, to engage with the lower surface 36a of the housing 36 which defines a stop for the piston 38 in its maximum lift position. A piston spring 58 housed within the upper bore region 30b, between the cap 46 of the piston 38 and the housing 36, serves to urge the piston 38 into the first position.

It is also contemplated that a resilient component (not shown) such as a polymer material may be provided at the seating interface between the cap 46 of the piston 38 and the lower surface 36a of the housing 36 to minimise impact noise and wear.

The provision of the piston spring 58 ensures the piston 38 remains in a position in which its lower surface 40 lies flush with the fire deck 22 for that period of the combustion cycle when pressure in the combustion chamber 12 is relatively low (i.e. prior to combustion). It is against this spring force that the piston 38 moves when it is subjected to the forces due to combustion pressure within the combustion chamber 12.

Optionally, the hollow piston 38 is partially filled with sodium salts or similar material 60 to aid heat transfer away from the lower face 40 of the piston 38 to the cylinder head 20, in use. For example, sodium salts is solid at relatively low temperature but it melts as it heats up to conduct heat away from the lower face 40 of the piston 38 through the walls of the piston 38 to the cylinder head 20. The piston 38 is preferably made from a ceramic material (e.g. silicon nitride) having a low coefficient of thermal expansion so as to minimise the risk of the piston 38 becoming stuck in the lower bore region 30a on cold start-up. The piston 38 could also, if manufactured from metal, be coated with a hard, low friction diamond-like carbon coating to minimise friction as it moves within lower bore region 30a. The surface of the lower bore region 30a may also be provided with a similar coating.

An end surface of the pumping plunger 50 defines, together with the further bore 52 in the housing 36, a pump chamber 54 for receiving fuel. The pump chamber 54 has an inlet/outlet 62 port which is connected with one end of a connecting flow passage 64 which, at its other end, communicates with an inlet/outlet port 66 of a control valve arrangement. The control valve arrangement has a valve housing 68 and comprises two valve assemblies, a rail control valve assembly, referred to generally as 70, which is controlled by the ECU 16, and a filling valve assembly, referred to generally as 72.

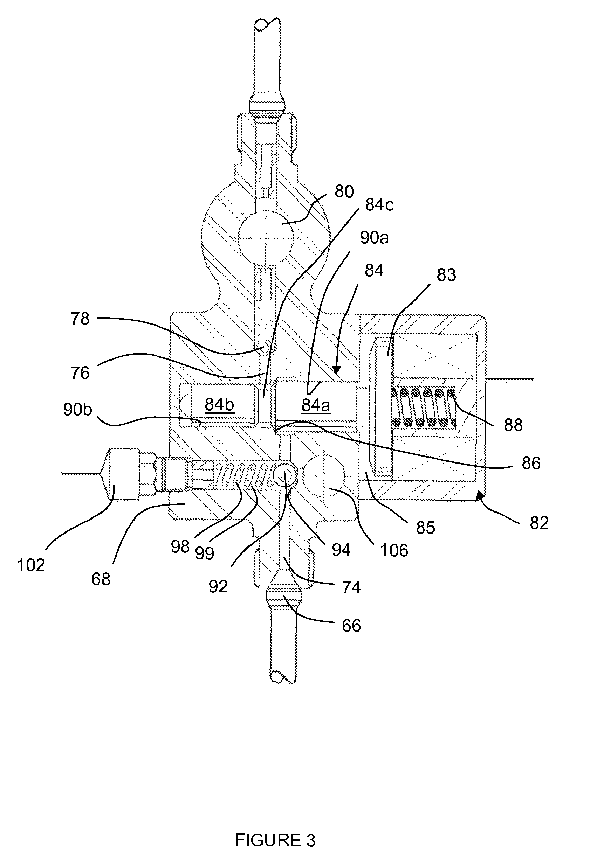

The control valve arrangement is also described with reference to Figure 3. The valve housing 68 is provided with a first passage 74 which communicates with a second passage 76 within the valve housing 68 under the control of the rail control valve assembly 70. The second passage 76 is arranged to deliver fuel to an accumulator volume 80 (referred to as the rail volume 80) defined within the valve housing 68.

In the embodiment of Figures 1 and 3, the rail volume 80 is integrated with the valve housing 68 which may be mounted external to the cylinder head 20 but, in an alternative embodiment (not shown), the valve housing 68 may be mounted under the engine's valve cover (also referred to as the rocker cover). Other arrangements (not shown), including integrating the valve housing 68 within the housing 36, are also contemplated.

The second passage 76 is provided with a non-return or check valve 78, located between the rail control valve assembly 70 and the rail volume 80. Via the non-return valve 78, the rail control valve assembly 70 provides a means for controlling communication between the pump chamber 54 (via the connecting passage 64 and the first passage 74), and the rail volume 80. The rail volume 80 is connected to the injector 14 by the supply passage 18 and, optionally, may be connected to a supply passage (not shown) for one or more other injectors of the engine.

The rail control valve assembly 70 is operable under the control of a rail control valve actuator 82 to move between an open position in which a rail control valve pin 84 of the assembly is spaced from a valve seat 86 and a closed position in which the rail control valve pin 84 is seated against the valve seat 86. The rail control valve actuator 82 is a solenoid or other electrically operated actuator having an armature 83 housed within an armature chamber 85. A rail control valve spring 88 serves to urge the rail control valve pin 84 into its closed position.

The rail control valve pin 84 includes an enlarged diameter region 84a and a reduced diameter region 84b joined by a neck region 84c. The enlarged and reduced diameter regions 84a, 84b of the rail control valve pin 84 are movable within bores 90a, 90b, respectively, provided in the valve housing 68. The first passage 74 terminates in an annulus within the valve housing 68, specifically at an inner end of the bore 90a adjacent to the seat 86. The seat 86 forms a transition between the bores 90a and 90b. In this region, the enlarged diameter region 84a of the rail control valve pin 84 seats on the valve seat 86 to prevent communication between the first and second passages 74, 76. To the left of the valve seat 86 (in the orientation shown in Figures 1 and 3), the annulus defined at the neck 84c of the rail control valve pin 84 communicates with the second passage 76.

In use, when the rail control valve actuator 82 is de-actuated, the rail control valve pin 84 is held against the valve seat 86 under the force of the rail control valve spring 88 so as to close communication between the first and second passages 74, 76. When the rail control valve actuator 82 is actuated, the rail control valve pin 84 is caused to move to the right (in the orientation shown in Figures 1 and 3), against the force of the spring 88, so as to open communication between the first and second passages 74, 76. A differential angle may exist between the seat 86 in the valve housing 68 and the corresponding seat on the rain control valve pin 84. The differential angle ensures that seat contact is made on the outside diameter of the rail control valve pin 84a so that it is pressure balanced with respect to fuel pressure in the first passage 74. This means that only a relatively low actuation force is required by the actuator to move it between the closed and open positions.

The filling valve assembly 72 includes a filling valve 92 in the form of a ball valve. The filling valve 92 is movable towards and away from a filling valve seat 94, defined in the first passage 74, between closed and open positions respectively. A filling valve spring 98 housed within a spring chamber 99 serves to urge the filling valve ball 92 into its closed position in which it seats against the valve seat 94.

The valve housing 68 is also provided with a branch passage 100 which connects the first passage 74 with a low pressure supply gallery 106 when the filling valve 92 is lifted from the valve seat 94. Typically, the low pressure gallery 106 is supplied with fuel from a remote pump at a pressure of about 5 bar. The filling valve 92 is operable to control whether the first passage 74 is able to communicate with the low pressure gallery 106, through the branch passage 100, or whether communication between the first passage 74 and the low pressure gallery 106 is closed. When the filling valve 92 is held against the filling valve seat 94 by means of the filling valve spring 98, communication between the branch passage 100 and the low pressure gallery 106 is closed. When the filling valve 92 is caused to move to the left (in the orientation shown in Figures 1 and 3), against the force of the filling valve spring 98, communication between the branch passage 100 and the low pressure gallery 106 is open. It will be appreciated that when the filling valve 92 is seated against the valve seat 94, communication between the first passage 74 and the low pressure gallery 106 is closed but the first passage 74 still communicates with the annulus in the bore 90a.

A pressure sensor 102 forms a plug for the spring chamber 99 of the filling valve assembly 72 and provides an output signal to the ECU 16 to influence the timing of operation of the rail control valve assembly 70, as discussed further below.

Drillings (not shown) connect the left hand end of the bore 90b for the rail control valve pin 84 and the armature chamber 85 of the actuator 82 with the filling gallery 106 so that any leakage of fuel past the rail control valve pins 84a, 84b may be returned to the filling gallery 106.

Operation of the fuel system will now be described in further detail for a four stroke combustion cycle.

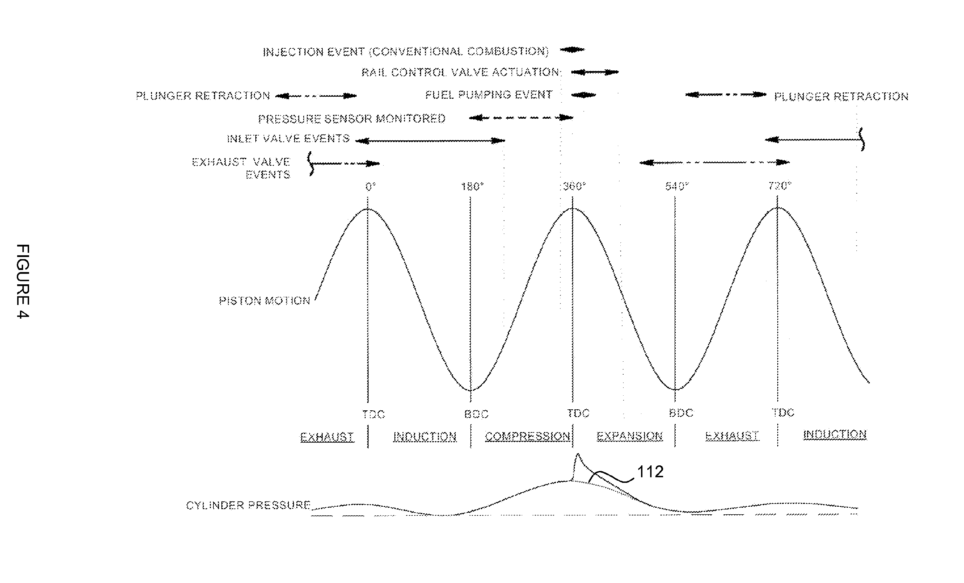

For the purpose of the following description, it helps to appreciate that the combustion cycle typically includes four phases corresponding to four strokes of the cylinder piston: an intake (induction) stroke, a compression stroke, a power (expansion) stroke and an exhaust stroke. The invention is applicable to combustion cycles having a different number of strokes (e.g. two, six, eight) but for simplicity only a four stroke combustion cycle will be considered here. Figure 4 is an event timing diagram for a four stroke combustion cycle: induction, compression, power and exhaust. The time base is engine crankshaft position (degrees of rotation), moving from left to right.

On the intake stroke, the cylinder piston 26 is moved outwardly from the combustion chamber 12, moving between top dead centre (TDC) and bottom dead centre (BDC), and the intake valves are caused to open. Typically, the exhaust valves are closed at this time. Air is drawn into the cylinder through the open intake valves through suction, or under boost pressure, together with recirculated exhaust gas from the EGR system.

During the compression stroke, the cylinder piston 26 is driven inwardly towards the cylinder head 20, between BDC and TDC, reducing the volume above the cylinder piston 26. The exhaust valves remain closed at this time. The intake valves start to close shortly after the cylinder piston 26 commences the compression stroke. As the cylinder piston 26 moves inwardly within the combustion chamber 12 during the compression stroke, air in the combustion chamber 12 is compressed and air temperature increases significantly.

When the cylinder piston 26 is nearing the top of its stroke (TDC), fuel is injected into the combustion chamber 12 and starts to burn (auto-ignite), starting the combustion process. The heat released as a result of the combustion process causes pressure in the combustion chamber 12 to increase.

The pressure increase acts on the cylinder piston 26, driving the piston away from the cylinder head 20, between TDC and BDC, to increase the force on the crankshaft for the power stroke. Towards the end of the power stroke, the exhaust valves are caused to open and, for the subsequent exhaust stroke as the cylinder piston 26 is driven inwardly within the cylinder sleeve 24, towards the cylinder head 20, exhaust is expelled through the open exhaust valves to the manifold.

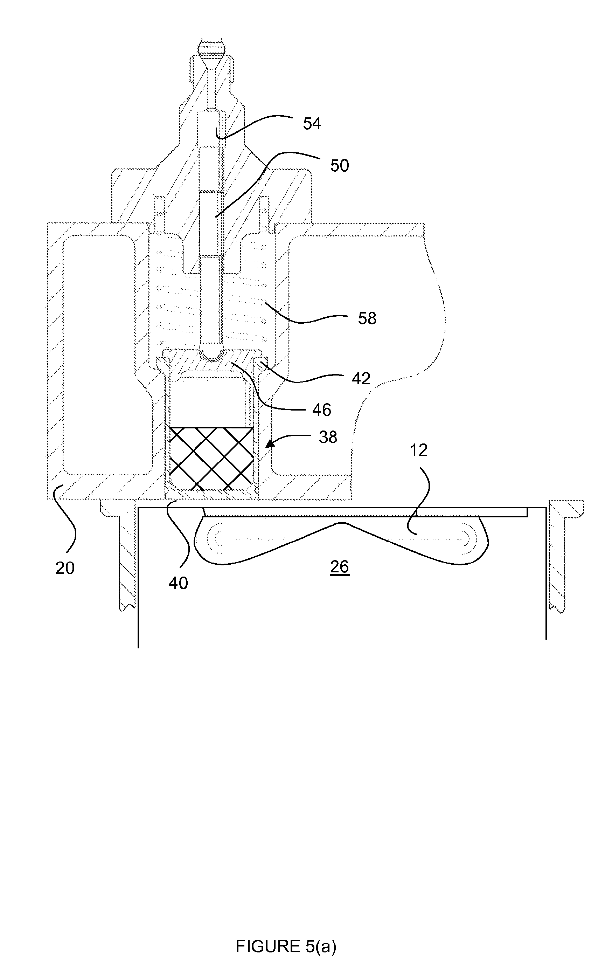

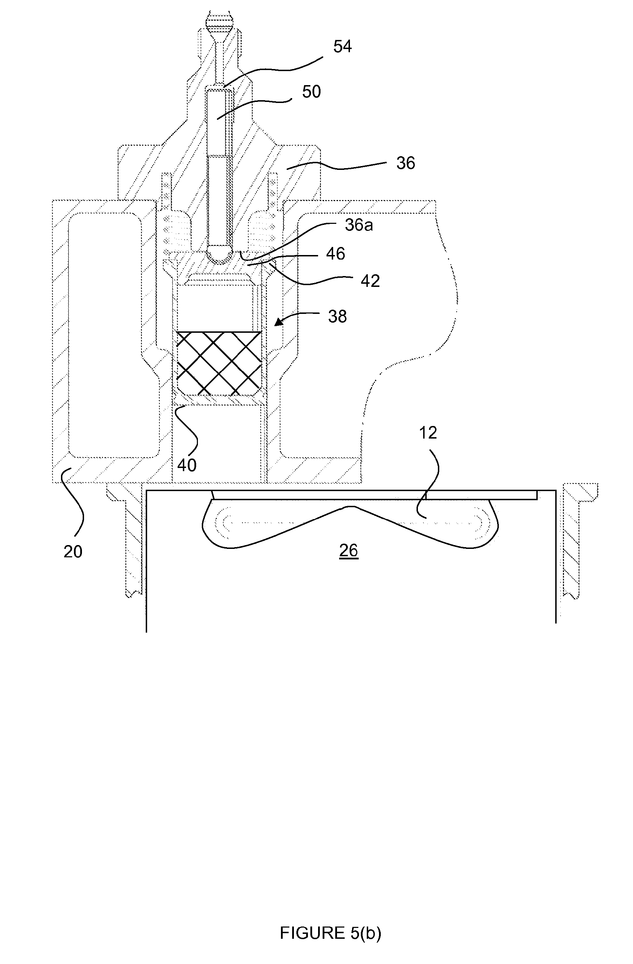

There now follows a description of the operation of fuel system in Figure 1, with further reference to Figure 4, Figures 5(a) and 5(b). The timing of opening and closing of the rail control valve pin 84 and the filling valve pin 92 is illustrated in the timing diagram of Figure 4, together with a representation of cylinder pressure. It is assumed that the operating strategy is an advance premixed combustion mode (e.g. HCCI) and that the engine has a variable valve actuation (WA) mechanism (not shown) and a high flow EGR system (also not shown).

At or around the start of the intake stroke, the piston 38 is urged, by means of the piston spring 58, into the position in which its lower surface 40 lies flush with the fire deck 22. The pressure of fuel in the gallery 106 is sufficient to overcome the force due to the spring 98 and so, as a result, the filling valve 92 is caused to open against the spring 98. The low pressure gallery 106 is therefore brought into communication with the first passage 74. The rail control valve assembly 70 is in a closed state so that the pin 84 is on its seat 86 and communication between the first and second passages 74, 76 is closed. Fuel at high pressure from the preceding cycle has therefore been trapped in the rail volume 80 due to the non-return valve 78, which is also closed.

As the piston 38 is urged towards its rest position under the force of the piston spring 58, the pumping plunger 50 retracts from the pump chamber 54 causing low pressure fuel to be drawn from the low pressure gallery 106, past the open filling valve 92 and into the pump chamber 54 via the connecting flow passage 64. Once the piston 38 has reached its rest position, with the annular lip 42 in abutment with the seat 34, the filling valve 92 is caused to close under the force of the spring 98, at or near the end of the intake stroke. With the piston 38 in the position in which the annular lip 42 at the upper end of the piston 38 is urged against the seat 34, its lower surface 40 lies flush with the fire deck 22. This is the position of the pump arrangement shown in Figure 5(a). During the intake stroke, with the cylinder piston 26 moving away from the cylinder head 20, the intake valves are opened and air is drawn into the combustion chamber 12.

The cylinder piston 26 then performs the compression stroke, during which fuel is injected into the cylinder via the injector 14 to initiate the power stroke. The rail control valve pin 84 remains seated throughout both the intake stroke and the compression stroke.

During the compression stroke, and depending on the particular injection strategy chosen, multiple small injections of fuel may be introduced by the injector 14 to the combustion chamber 12 to produce a lean homogeneous charge. If the quantity and temperature of the EGR have been controlled accurately, the valve timing controlled appropriately, the fuel has mixed homogeneously and the compression pressure is as predicted, the combustion chamber charge will auto-ignite spontaneously and concurrently throughout the combustion chamber resulting in a rapid increase in pressure just after TDC.

During the compression stroke, rapidly increasing pressure within the combustion chamber 12 acts upon the lower surface 40 of the piston 38 and causes the piston 38, acting through the cap 46 and the plunger 50, to pressurise fuel within the pump chamber 54 in proportion to cylinder pressure. It will be appreciated that the pump chamber 54 is part of a hydraulically locked volume comprising the passages 64, 74, due to the rail control valve pin 84 and the filling valve 92 being closed.

The pressure sensor 102 senses the pressure in the spring chamber 99 (and hence in the pump chamber 54) and, in response to the pressure signal, the ECU 16 actuates the rail control valve assembly 70 to open communication between the first and second passages 74, 76. The rail control valve assembly 70 is opened at or very close to TDC once the ECU 16 determines the imminent onset of the auto-ignition combustion, via the signal from the pressure sensor 102.

It is a particular feature of the invention that, at the start of the power stroke just after TDC, the piston 38 is caused to move outwardly from the combustion chamber 12 into its maximum lift position as a result of the high temperature, and hence pressure, within the combustion chamber 12 due to rapid oxidation of the fuel (rapid combustion). This is the position of the pump arrangement in Figure 5(b), with the piston 38 moved into abutment with the lower surface 36a of the housing 36 which defines its maximum lift position.

As the piston 38 is moved into its maximum lift position, the pumping plunger 50 is forced into the pump chamber 54 to reduce its volume. This causes fuel within the pump chamber 54 to be pressurised still further and pumped through the connecting passage 64.

The low weight of the piston 38 ensures that it is responsive to the high rates of pressure rise (dp/dt) that occur upon auto-ignition. As a result of the piston 38 moving outwardly from the combustion chamber 12, the combustion chamber volume is increased concurrent with the rapid increase in cylinder pressure. The effect of dynamic modification of the combustion volume during the main combustion event is to moderate the rate of pressure increase with respect to time, and so noise and structural stress in the cylinder head 20 and engine scantlings is reduced.

With the rail control valve assembly 70 open, pressurised fuel in the pump chamber 54 is displaced through the connecting flow passage 64, into the first and second passages 74, 76. When fuel pressure within the passages 74, 76 exceeds that within the rail volume 80, the non-return valve 78 is caused to open so that fuel within the pump chamber 54 is able to flow past the open rail control valve pin 84 and the open non-return valve 78 into the rail volume 80.

The spring-loaded non-return valve 78 will close once the flow from the pump chamber 54 has abated, trapping the displaced high pressure fuel within the rail volume 80. At this time also, the actuator 82 for the rail control valve assembly is deactivated by the ECU 16 to allow the rail control valve pin 84 to return to its seat 86, thus interrupting communication between the first and second passages 74, 76 and isolating the rail volume 80 from the pump chamber 54.

To prevent heavy metal to metal impact between the piston cap 46 and the stop-face 36a at the end of the pumping stroke due to the rapid displacement of the piston 38, the rail control valve assembly 70 can be deactuated to close the valve pin 84 against its seat 86 just before full stroke is reached so that the combination of the piston 38 and the plunger 50 are arrested instead by hydraulic lock in the communicating passages 64, 74.

Fuel at high pressure that is trapped within the rail volume 80 can be delivered via the supply passage 18 to the injector 14, or other injectors similarly connected to the rail volume 80, for subsequent injections.

During the exhaust stroke that follows the power stroke, and with the piston 38 in its maximum lift position, the exhaust valve (not shown) of the cylinder is actuated so as to allow a flow of exhaust gas to escape from the combustion chamber 12.

At the end of the exhaust stroke when pressure within the cylinder 12 is low, the filling valve 92 is caused to disengage from its seat 94 so that fresh fuel from the gallery 106 may enter the passages 74, 64, thereby replenishing the pump chamber 54 as the piston 38 returns to its rest position. As the piston 38 returns to its rest position, the pumping plunger 50 retracts from the pump chamber 54 and fuel starts to fill the pump chamber 54, ready for the next combustion cycle. The piston 38 is therefore urged back into its rest position under the force of the piston spring 58, acting in combination with filling pressure on the pumping plunger 50.

It will be appreciated from the foregoing description that the system utilises movement of the piston 38 under gas pressure within the combustion chamber 12 to pressurise the fuel that is injected by the injector 14. The need for a separate costly and bulky high pressure fuel pump can therefore be avoided, whilst retaining the recognised benefits of a common rail injection system with its flexibility of injection timing and pressure control. This method of generating injection pressure is also more efficient than a conventional arrangement since many, if not all, of the areas of friction in a pump drive are eliminated. Further, future combustion systems are expected to require injection pressures well in excess of 2000 bar, higher than it is convenient to generate in a single pumping stage. To address this requirement, intensified injection systems are widely contemplated. Addition of an intensifier module to future fuel injection systems is expected to increase the cost, whereas in the present invention no additional pump is required since the intensifier is also the pump, leading to a lower cost system.

In common rail diesel engines currently being designed, peak cylinder pressures are generally in the range of 180 to 220 bar and peak injection pressures are generally in the range of 2000 to 2200 bar. It is therefore necessary to have a piston/pumping plunger area ratio of at least 10:1, and possibly 15:1 or more as higher pressures are contemplated. The principle requirement for the pump in this case is for high pressure but low volume displacement.

In an alternative mode of operation to that described previously, the rail control valve assembly 70 can be operated so as to provide an inlet metering function for the rail volume 80. If pressure in the rail volume 80 is already at its target value, the rail control valve assembly 70 need not be energised to move the rail control valve pin 84 away from its seat to allow fuel in the chamber 54 to flow to the rail volume 80 and, thus, the piston 38 is not displaced to pressurise fuel in the pump chamber 54.

As the cylinder pressure rises during the compression stroke and fuel or fluid within the pump chamber 54, at this time being in a condition of hydraulic lock, is thereby pressurised, the output signal from the pressure sensor 102 can be used to provide an indication of the combustion chamber pressure. If the area ratio between the piston 38 and the pumping plunger 50 (typically 10:1 or greater) is known, combustion chamber pressure can therefore be calculated from the fuel pressure measurement by the pressure sensor 102. As can be seen in Figure 4, the pumping event performed by the plunger 50 aligns with the combustion event, as indicated by the departure of the cylinder pressure trace from the dashed line 112 which illustrates a non-firing event.

This method of measuring pressure within the combustion chamber 12 represents an advantage since it avoids the problems associated with conventional cylinder pressure sensors which have to withstand the harsh environment (e.g. high temperature and pressure) of the combustion chamber directly. In the present invention, the pressure sensor 102 can be mounted conveniently on the valve housing 68, outside the combustion chamber 12.

It will be appreciated that, during the power stroke once the rail control valve assembly 70 has been opened to allow communication between the first and second passages 74, 76 (and hence flow between the pump chamber 54 and the rail volume 80), the pressure sensor 102 no longer provides a meaningful indication of combustion chamber pressure.

During the intake stroke, boost pressure will typically be tracked by a manifold absolute pressure (MAP) sensor and this signal may be used to confirm the pressure sensor output signal at this time since the piston 38 is also exposed to the same pressure in the combustion chamber 12.

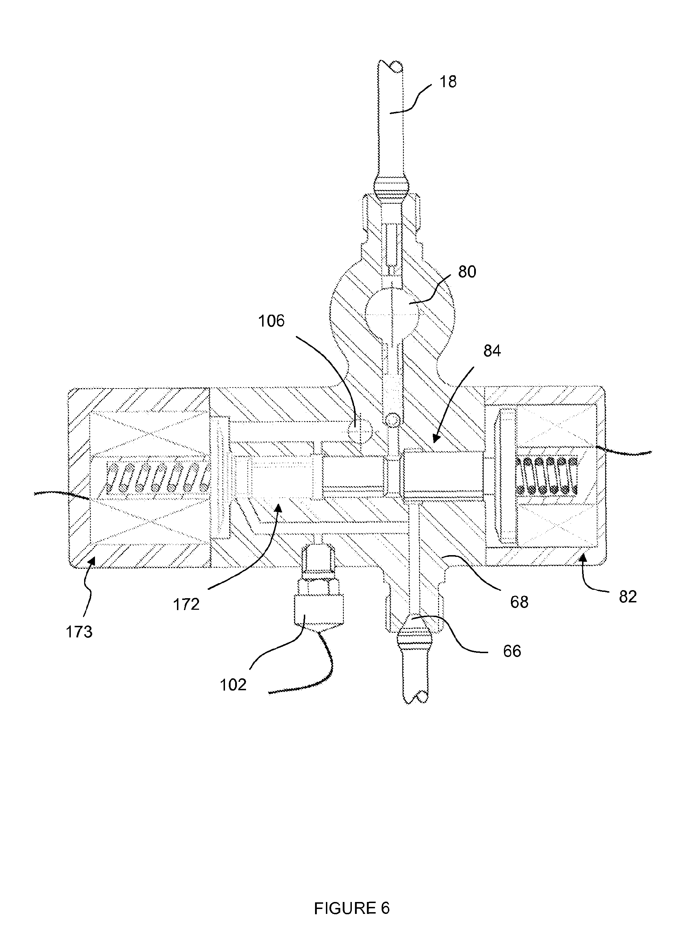

In an alternative embodiment of the invention, as shown in Figure 6, the spring-controlled filling valve assembly 72 in Figures 1 and 3 is replaced by an electronically controlled filling valve assembly 172. Like parts to those shown in Figures 1 and 3 are denoted with like reference numerals. The electronically controlled filling valve assembly 172 includes an actuator 173 which can be energised and deenergised to allow the filling valve assembly to open and close, respectively. Although the use of an electronically controlled filling valve 172 adds to the cost of the overall system, it provides an extra degree of control of the system which may be beneficial in certain circumstances.

A further benefit of having an electronically controlled filling valve assembly 172 may arise if the invention is implemented in an engine which does not enjoy the benefit of a variable compression ratio mechanism or variable valve timing, and is therefore not able to control effective compression ratio through varying when the intake valves close. In this case, the pump arrangement 32 provides a means of influencing the start of combustion in a different way. A small measure of compression ratio control may be implemented as follows.

As combustion chamber pressure rises at the start of the compression stroke, the electronically controlled filling valve assembly 172 is energised briefly to force it to open, to allow the piston 38 to retract and thereby change the volume of the combustion chamber 12. The time period for which the filling valve assembly 172 is open controls the amount of piston movement and, hence, the amount by which the combustion chamber volume is increased. Since this facility to reduce the effective compression ratio is required only while operating in the pre-mixed auto-ignition mode, and therefore only under part load conditions, the full stroke of the piston 38 and the plunger 50 is not required for fuel delivery and so some part of the stroke can be given up to controlling the compression ratio in this way.

In a variation of the aforementioned strategy, the filling valve assembly 172 may be deactivated (closed) early in the intake stroke so that movement of the piston 38 into its rest position is halted early (i.e. before it reaches the position of Figure 5(a)). In this instance the volume of the combustion chamber 12 is slightly higher than its nominal value, which results in a lower geometric compression ratio than for the other cylinders. This capability may therefore also be used to effect some degree of cylinder-to-cylinder compression ratio trim.

The pump arrangement of the invention can be used on engines that operate in a conventional (late injection) diesel injection mode, or those that operate in advanced premixed combustion mode (e.g. HCCI), or multiple mode engines (typically premixed at part load and conventional at high load). When operating in premixed combustion modes in particular, it is helpful to estimate the likely timing of combustion. With the present invention, this can be deduced using the cylinder pressure that is determined from the output of the pressure sensor 102 and the position of the cylinder piston 26. Together with knowledge of boost pressure, temperature, humidity and the gas constituents of the combustion chamber, conditions at or near TDC can be determined and, hence, the likely timing of combustion can be estimated even if cool-flame reactions are not present.

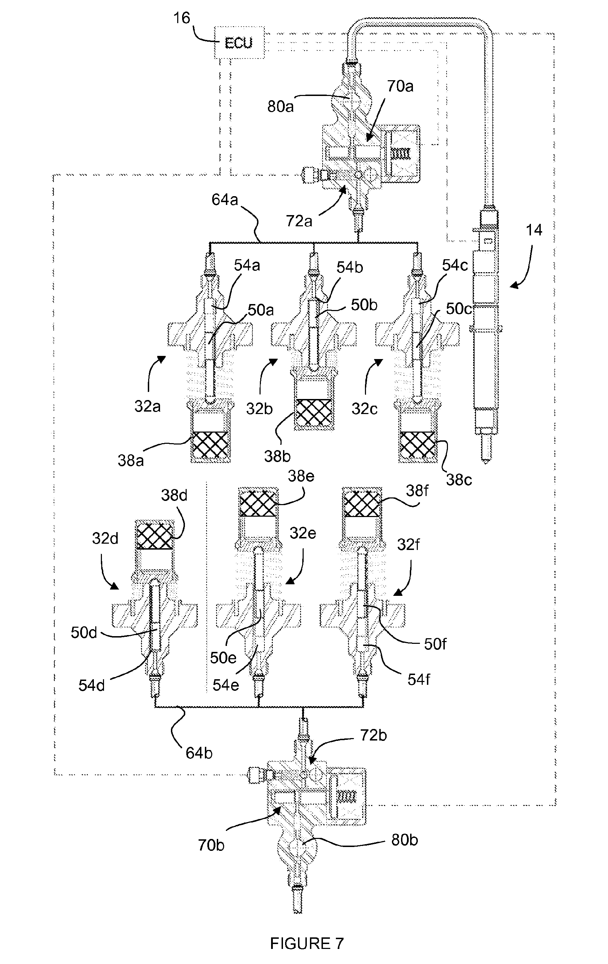

Figure 7 shows the first embodiment of the invention, as shown in Figures 1 and 3, when implemented in a six cylinder engine, each of which has an associated pump arrangement 32a-32f. The cylinders are split into two banks, a first bank of three having associated pump arrangements 32a, 32b, 32c and a second bank of three having associated pump arrangements 32d, 32e, 32f. The pump arrangements 32a-32f are all identical to one another and take the form of those shown in Figures 1 and 3. Each pump arrangement 32a, 32b, 32c associated with the first bank of cylinders therefore includes a piston 38a, 38b, 38c, respectively, which is movable in response to pressure within the combustion chamber, a plunger 50a, 50b, 50c which is coupled to the respective piston 38a, 38b, 38c and a pump chamber 54a, 54b, 54c. A rail control valve assembly 70a, a filling valve assembly 72a, and a rail volume 80a are common to all three pump arrangements 32a, 32b, 32c of the first bank. A communicating passage 64a, common to each pump arrangement 32a, 32b, 32c, provides a communication route between the pump arrangements 32a, 32b, 32c and the valve assemblies 70a, 72a.

Likewise, each pump arrangement 32d, 32e, 32f associated with the second bank of cylinders includes a piston 38d, 38e, 38f, respectively, which is movable in response to pressure within the combustion chamber, a plunger 50d, 50e, 50f which is coupled to the respective piston 38d, 38e, 38f and a pump chamber 54d, 54e, 54f. A rail control valve assembly 70b, a filling valve assembly 72b, and a rail volume 80b are common to each of the pump arrangements 32d, 32e, 32f of the second bank. A communicating passage 64b, common to each pump arrangement 32d, 32e, 32f of the second bank, provides a communication route between the pump arrangements 32d, 32e, 32f and the valve assemblies 70b, 72b.

In the embodiment of Figure 7, where there is one rail control valve assembly, 70a or 70b, shared between three pump arrangements, 32a-32c or 32d-32f respectively, when one of the pump arrangements of a bank is pumping the pressurised fuel is communicated, via the respective communicating passage, 64a or 64b, to the pump chambers of the other pump arrangements of the bank. For example, for the first bank having pump arrangements 32a, 32b and 32c, when the first pump arrangement 32a is pumping the pump chambers 54b, 54c of the second and third pump arrangements 32b, 32c are supplied with pressurised fuel via the communicating passage 64a. The resultant force due to fuel pressure within the pump chambers 54b, 54c of the second and third pump arrangements 32b, 32c is reacted through the plungers 50a, 50b, to the piston caps of each piston 38b, 38c, to the annular lip of each piston 38b, 38c and to the step (not shown in Figure 7 but equivalent to step 34 in Figures 1 and 3) for the annular lip. The same applies when the second or third pump arrangement 32b, 32c is pumping, and also to the pumping cycle of the second bank of pump arrangements 32d-32f. This feature of the system may require the return spring 58 for each pump arrangement 32a-32f to be strong enough to return each piston 38a-38f to its rest position (i.e. with its lower surface flush with the fire deck and the annular lip of the piston 38a-38f resting on its step) during the exhaust stroke, as opposed to the inlet stroke as described previously for Figures 1 and 3. In this way the active pumping stroke for each plunger 54a-54f is not used up simply returning the non-active plungers back to their rest positions.

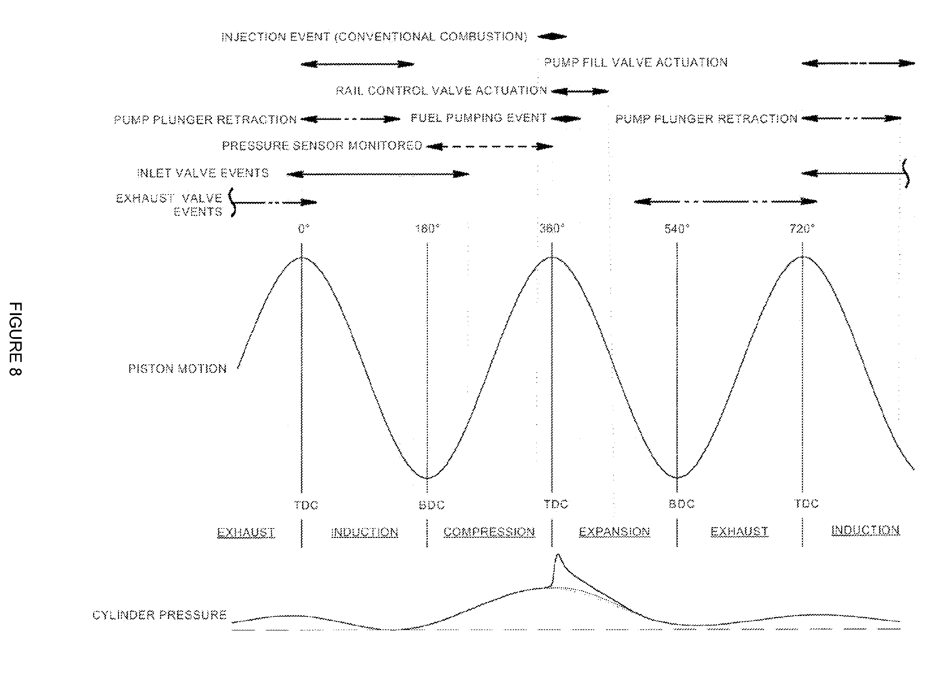

The timing diagram in Figure 4 corresponds to the situation described in the preceding paragraph, where the pumping plunger 50a-50f is retracted during the exhaust stroke. In the alternative embodiment in which an electronically controlled filling valve assembly 172, as in Figure 6, is used in a single cylinder engine, the timing event diagram in Figure 8 illustrates that plunger retraction can occur later in the cycle, during the intake stroke when combustion chamber pressure is lower.

In an alternative arrangement to that shown in Figure 7, a pump arrangement 32 may be provided in only some of the engine cylinders.

The pump arrangements 32a, 32b, 32c of the first bank may be provided for the purpose of pressurising fuel for the rail volume 80a for injection, as described previously with reference to Figures 1 and 3, whereas the pump arrangements 32d, 32e, 32f of the second bank may be provided for a purpose of pressurising fuel (or another fluid) for the rail volume 80b for another function of the engine. For example, the resulting fluid pressure from the pump arrangements 32d, 32e, 32f of the second bank may be used for an electro-hydraulic VVA system and/or a hydraulically assisted turbo-charger. For the electro-hydraulic VVA system and/or the hydraulically assisted turbo-charger, a reduced hydraulic pressure is required relative to that required for the fuel injection system so that the piston/pumping plunger area ratio (i.e. the area of the piston 38 to the plunger 50) may be lower, for example 5:1, for the second bank of pump arrangements 32d, 32e, 32f, resulting in a higher volumetric fluid flow rate. In the case of the electro-hydraulic VVA system at least, if not the hydraulic assisted turbocharger application, the preferred fluid used would be diesel fuel. With a fuel rail at, for example, 250 bar, this could also then be available as a source of fuel for multiple injections into the combustion chamber 12 during the compression stroke under premixed combustion operation, or for other operations such as post injection or injections into the exhaust system for re-generation of an after treatment device of the engine (after treatment generation). In this embodiment diesel fuel would be used to fill both rail volumes but at two different pressures. An example of such a system is described in the Applicant's patent US 7037349.

In a further embodiment, the pump arrangements 32d, 32e, 32f associated with the second bank of cylinders may be used to pressurise a fuel other than diesel. The concept of using bi-fuel or dual fuel engines is known, with the engines being configured to operate on either one or the other fuel at the drivers command, typically depending on fuel availability. One example is systems which are engineered to run on either gasoline or ethanol, or systems which have two separate fuel systems and can run on compressed natural gas or gasoline. The term dual fuel is used here to refer to an engine which uses two fuels at once, one example being compressed natural gas (CNG) engines that require a pilot injection of diesel fuel as the ignition source (referred to as diesel-CNG). By way of example, a dual fuel system is described in US 5996558.

Of course, it may be that only a single pump arrangement is needed for pressurising fuel or another fluid for any one purpose, rather than pump arrangements associated with the entire bank.

If the pump arrangements on two different engine cylinders, or two different banks of engine cylinders, are used for pressurizing fuel for combustion in the combustion chamber 12, the fuels may be the same, for example diesel fuel (as described previously), or they may be two different fuels, for example a non-reactive compression ignition fuel such as liquid propane gas (LPG) and a reactive compression ignition fuel such as dimethyl-ether (DME) at appropriate pressures. In this case, the engine would be largely fuelled by the non-reactive fuel, but the combustion event would be initiated by a small injection of the reactive fuel at the appropriate time typically close to TDC. In another embodiment, the two pump arrangements may represent separate fuel injection systems by which the engine may be fuelled independently depending on the availability of fuel at that time.

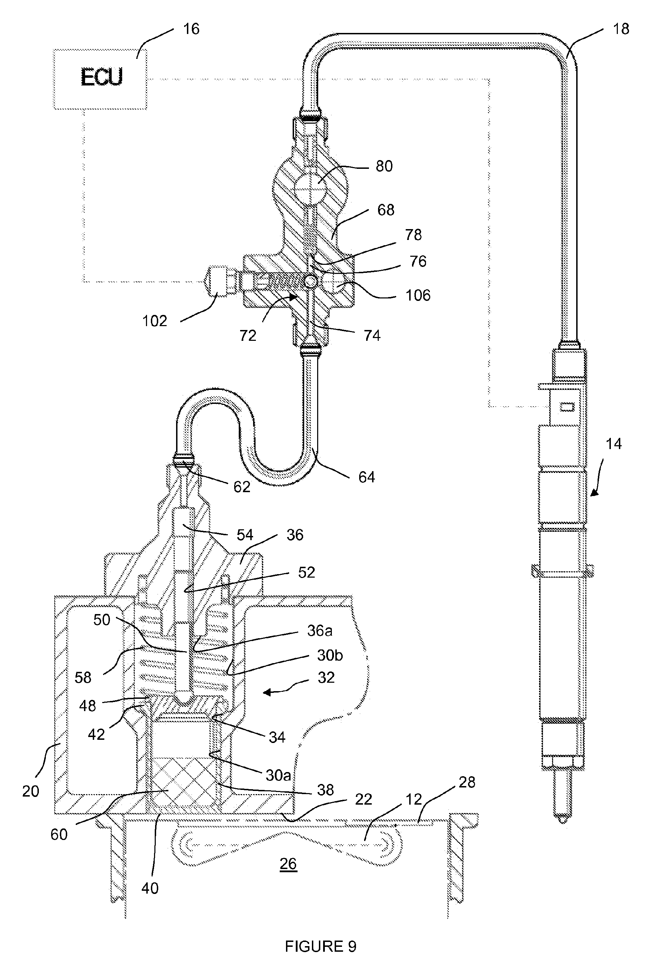

Referring to Figure 9, in a still further embodiment of the invention the rail control valve assembly of the previously described embodiments is removed so that the valve housing 68 houses only the spring controlled filling valve assembly 72, as in the embodiment of Figures 1 and 3. In Figure 9, similar like parts to those shown in Figures 1 and 3 are denoted with like reference numerals. As in known systems, a pressure control sensor (not shown) is fitted to the rail volume 80 to provide an output signal indicative of rail pressure to the ECU 16.

In the absence of the rail control valve assembly 70, the system operates as described previously for Figures 1 to 5, except that it is clearly no longer possible to prevent a pumping event in the pump chamber 54 by breaking communication between the passages 74, 84 to isolate the pump chamber 54 from the rail volume 80. Pumping will occur in the pump chamber 54 during the compression stroke of the cylinder 26 in circumstances in which the pressure in the pump chamber 54 exceeds the pressure of fuel in the rail volume 80, as measured by the rail pressure sensor. This may occur prior to the combustion event, depending on the area ratio of the piston 38 to the plunger 50. For example, for a piston/plunger area ratio of 10:1, a typical 40 bar compression pressure in the combustion chamber 12 will generate a 400 bar pressure in the pump chamber 54, and so pumping will commence at any stage of the compression stroke for which the pressure of fuel in the rail volume 80 is lower than this. This is unlikely to cause a problem, however, as the pressure of fuel in the rail volume 80 is typically above this value. Also, it is possible to size the spring 58 so that the preload prevents pumping too early in the combustion stroke. Despite the slight loss of control by removing the rail control valve assembly 70, the embodiment of Figure 9 provides a cost benefit of having a reduced part count.

A rail pressure control valve (not shown) is also required in this embodiment as, without the inlet metering function of the rail control valve assembly, it is likely that more fuel than is required will be pumped, some of which will need to be returned to low pressure via the rail pressure control valve. Rail pressure control valves are well known in the art to relieve excessive pressure in the rail volume.

The system in Figure 9 shows a pressure sensor 102 to provide an indication of the combustion chamber pressure, as in the previously described embodiments. Although the sensor 102 is not required to provide a signal to the absent rail control valve assembly, it may still be a useful feature, for example to provide an input of cylinder pressure to a NOx model for selective catalytic reduction (SCR) control.

It will be appreciated that the various aspects of the invention described here are not limited to application in the specific engines described, and may be applicable, for example, to any of spark ignition, compression ignition, pulse-detonation, 2-stroke, 4-stroke and/or single or multiple cylinder engines operating on any fuel.

## Claims

1. A fuel system for use in a combustion chamber (12) of a compression ignition internal combustion engine, the fuel system comprising:
a pump arrangement (32a-32f) having a pump chamber (54) for fluid and a piston (38) which is movable outwardly from the combustion chamber (12) in response to pressure generated within the combustion chamber (12) as a result of combustion so as to pressurise fluid within the pump chamber (54), and
a control valve assembly (70; 70a, 70b) for controlling the supply of fluid that is pressurised within the pump chamber (54) to an accumulator volume (80; 80a, 80b).

2. The fuel system as claimed in claim 1, further comprising a filling valve assembly (72; 172; 72a, 72b) for regulating an intake of low pressure fluid to the pump chamber (54) from the low pressure fluid source, prior to pressurisation.

3. The fuel system as claimed in claim 2, wherein the filling valve assembly (72; 72a, 72b) includes either a spring-controlled filling valve (92) or an electronically controlled filling valve.

4. The fuel system as claimed in any preceding claim, further comprising a cylinder head (20) for the combustion chamber (12), wherein the pump chamber (54) is defined within a pump housing (36) received within the cylinder head (20).

5. The fuel system as claimed in any preceding claim, wherein the piston (38) is at least partially filled with a medium for aiding heat transfer away from a surface (40) of the piston (38) that is exposed to gases within the combustion chamber (12).

6. The fuel system as claimed in any preceding claim, further including a sensor (102) for sensing the pressure in the pump chamber (54), whereby the control valve assembly (70; 70a, 70b) is actuated to open communication between the pump chamber (54) and the accumulator volume (80; 80a, 80b) in response to the sensed pressure.

7. The fuel system as claimed in any preceding claim, wherein the fluid is fuel.

8. A fuel system for use in a compression ignition internal combustion engine having at least two engine cylinders, the fuel system comprising:
a first pump arrangement (32a-32c) associated with one of the engine cylinders and a second pump arrangement (32d-32f) associated with the other of the engine cylinders, each of the first and second pump arrangements (32a-32f) having a pump chamber for fluid and a piston (38) which is movable outwardly from the combustion chamber (12) in response to pressure generated within the combustion chamber (12) as a result of combustion so as to pressurise fluid within the pump chamber,
the fuel system further comprising at least one control valve assembly (70a, 70b) for controlling the supply of fluid that is pressurised within the pump chamber of at least one of the pump arrangements to an accumulator volume (80a, 80b).

9. The fuel system as claimed in claim 8, wherein the control valve assembly is common to both the first pump arrangement (32a-32c) and the second pump arrangement (32d-32f) so as to control the supply of fluid that is pressurised within the pump chamber of both the first pump arrangement (32a-32c) and the second pump arrangement (32d-32f) to a common accumulator volume.

10. The fuel system as claimed in claim 8, comprising a first control valve assembly (70a) for controlling the supply of fluid that is pressurised within the pump chamber of the first pump arrangement to a first accumulator volume (80a) and a second control valve assembly (70b) for controlling the supply of fluid that is pressurised within the pump chamber of the second pump arrangement to a second accumulator volume (80b).

11. The fuel system as claimed in claim 9, wherein the common accumulator volume stores pressurised fluid in the form of fuel, in use, for the purpose of injection.

12. The fuel system as claimed in claim 10, wherein the first accumulator volume (80b) stores pressurised fluid in the form of fuel, in use, for the purpose of injection.

13. A fuel system for use in a combustion chamber (12) of a compression ignition internal combustion engine, the fuel system comprising:
a pump arrangement (32a-32f) having a pump chamber (54) for fluid and a piston (38) which is movable outwardly from the combustion chamber (12) in response to pressure generated within the combustion chamber (12) as a result of combustion so as to pressurise fluid within the pump chamber (54), and
a filling valve assembly (72; 172; 72a, 72b) for regulating an intake of low pressure fluid to the pump chamber (54), prior to pressurisation.

14. The fuel system as claimed in claim 13, further comprising a pressure sensor (102) for sensing the pressure of fluid within the pump chamber (54).

15. A method of operating a fuel system for a combustion cylinder (12) having an associated cylinder piston (26) for performing a combustion cycle including a compression stroke, the fuel system including a pump chamber (54) for fluid, a piston (38), and a control valve assembly (70; 70a, 70b), the method comprising:
moving the piston (38) outwardly from the combustion chamber (12) in response to pressure generated within the combustion chamber (12) as a result of combustion so as to pressurise fluid within the pump chamber (54),
sensing the pressure of fluid within the pump chamber (54) during the compression stroke, and
in response to the sensed fluid pressure, operating the control valve assembly (70; 70a, 70b) to permit a supply of fluid between the pump chamber (54) and the accumulator volume (80; 80a, 80b) at the imminent onset of auto-ignition combustion.

16. A method of operating a fuel system for a combustion chamber having an associated cylinder piston (26) for performing a combustion cycle including a compression stroke, the fuel system including a pump chamber (54) for fluid, a piston (38) and a filling valve assembly (72; 172; 72a, 72b) for regulating an intake of low pressure fluid to the pump chamber (54), the method comprising:
operating the filling valve assembly (72; 172; 72a, 72b) to open at or near the start of the compression stroke to allow the piston (38) to move outwardly from the combustion chamber (12) during the compression stroke in response to pressure generated within the combustion chamber (12) as a result of combustion, thereby to change the volume of the combustion chamber (12).
